# EUROPEAN PATENT APPLICATION

(11) **EP 2 613 101 A1**
(43) Date of publication of application: **10.07.2013**
(21) Application number: 11821761.1
(22) Date of filing: 30.08.2011
(51) Int. Cl.: F24F 13/28

(54) **FILTER TRANSFER MECHANISM AND AIR CONDITIONING INDOOR UNIT**

(30) Priority: 03.09.2010 JP 2010197458
(71) Applicant: Daikin Industries, Ltd., Osaka 530-8323 (JP)
(72) Inventor: GENNOUZONO, Kenji, Kusatsu-shi Shiga 525-8526 (JP); AKAI, Tatsuhiko, Kusatsu-shi Shiga 525-8526 (JP); NAGAOKA, Shinji, Kusatsu-shi Shiga 525-8526 (JP)
(74) Representative: HOFFMANN EITLE
(86) International application number: PCT/JP2011/069528
(87) International publication number: WO 2012/029745

(57) **Abstract**

Reduction in size of a driving part for driving an air filter of an air conditioner indoor unit is implemented in a filter moving mechanism configured to fold back and move the air filter in cleaning the air filter. In cleaning, a driving roller (54) of the filter moving mechanism (50) makes contact with the air filter (16) for transmitting a torque for moving the air filter (16) to the air filter (16). The air filter (16) is configured to be circulated between the driving roller (54) and an end roller (56). The air filter (16) is folded back at the end roller (56), while the end roller (56) is rotatably attached to a guide frame (53). A protruded portion (563) of the end roller (56) is configured to press the air filter (16) with a large force, whereas a non-protruded portion (564) of the end roller (56) is configured not to make contact with the air filter.

## Description

### TECHNICAL FIELD

The present invention relates to a filter moving mechanism for moving an air filter and an air conditioner indoor unit equipped with the filter moving mechanism.

### BACKGROUND ART

An air conditioner indoor unit, equipped with an air filter cleaning device, has been widely prevailed in recent years. For example, an air filter, disposed on the windward side of an indoor heat exchanger, is annularly shaped in an air filter cleaning device disclosed in Patent Literature 1 (a microfilm of Japanese Unexamined Utility Model Publication No. S62-160221). In cleaning the air filter, the air filter is circulated while receiving a force from a driving roller in a rotational motion, and a brush-like scraping member scrapes dirt and dust while making contact with the air filter.

### SUMMARY OF THE INVENTION

### <Technical Problem>

In the air conditioner indoor unit described in Patent Literature 1, the air filter is turned back by a cylindrical driven roller disposed in parallel to the driving roller in order to prevent increase in size of the air filter cleaning device. The air filter is turned back while the driven roller is rotated. Torque is thereby constantly required for rotating the driven roller. This makes it difficult to reduce the size of a motor for driving the driving roller.

It is an object of the present invention to achieve reduction in size of a driving part for driving an air filter of an air conditioner indoor unit in a filter moving mechanism configured to move the air filter and turn the air filter around in cleaning the air filter.

### <Solution to Problem>

A filter moving mechanism according to a first aspect of the present invention is configured to move a filter for automatic cleaning in an air conditioner indoor unit. The filter moving mechanism includes a driving part and a u-turn member. The driving part is configured to apply to the filter a force for moving the filter by making contact with the filter. The u-turn member turns back the filter. The u-turn member is attached in a rotatable state and includes at least one protruded portion and at least one non-protruded portion seen in a direction of a rotational axis thereof. The protruded portion of the u-turn member is configured to press against the filter, whereas the non-protruded portion of the u-turn member is configured either to press against the filter with a force less than a force of the protruded portion or not to make contact with the filter. Each corner portion of the protruded portion is preferably formed in an arc-like shape.

An air conditioner indoor unit according to a second aspect of the present invention includes: a filter for removing dirt and dust from an indoor air; and a filter moving mechanism. The filter moving mechanism includes: a driving part configured to apply to the filter a force for moving the filter; and a u-turn member for turning back the filter. The u-turn member is attached in a rotatable state and includes at least one protruded portion and at least one non-protruded portion seen in a direction of a rotational axis thereof. The protruded portion of the u-turn member is configured to press against the filter, whereas the non-protruded portion of the u-turn member is configured either to press against the filter with a force less than a force of the protruded portion or not to make contact with the filter.

According to either the filter moving mechanism of the first aspect or the air conditioner indoor unit of the second aspect, the filter can be normally turned back without rotating the u-turn member, while forces acting on the protruded portions are balanced. Accordingly, it is possible to eliminate the force for rotating the u-turn member. On the other hand, when the filter is turned back at a portion less easily turned back such as a high-stiffness portion, the u-turn member is rotated and the force required for turning-back the filter can be suppressed low. Accordingly, it is possible to suppress low both of the maximum force instantaneously required when turning-back of the filter is difficult and the regular force constantly required for moving the filter.

Either a filter moving mechanism according to a third aspect of the present invention or an air conditioner indoor unit according to a ninth aspect of the present invention relates to either the filter moving mechanism according to the first aspect or the air conditioner indoor unit according to the second aspect, and wherein the numbers of the aforementioned at least one protruded portion and the aforementioned at least one non-protruded portion included in the u-turn member are respectively plural, and the protruded portions and the non-protruded portions are disposed to be rotationally symmetric about the rotational axis as a rotational center.

According to either the filter moving mechanism of the third aspect or the air conditioner indoor unit of the ninth aspect, the u-turn member, when rotated, can be easily restored to a similar state to the pre-rotated state thereof, and therefore, it becomes easy to repeatedly rotate and use the u-turn member.

Either a filter moving mechanism according to a fourth aspect of the present invention or an air conditioner indoor unit according to a tenth aspect of the present invention relates to either the filter moving mechanism according to the first or third aspect or the air conditioner indoor unit according to the second or ninth aspect, and wherein the numbers of the aforementioned at least one protruded portion and the aforementioned at least one non-protruded portion included in the folding-back member are respectively three or more.

According to either the filter moving mechanism of the fourth aspect or the air conditioner indoor unit of the tenth aspect, variation in trajectory of the filter to be turned-back can be reduced even when the u-turn member is rotated, and therefore, it is possible to suppress low the filter from vertically displacing with respect to the filter moving direction and to suppress low the tension of the filter from varying.

Either a filter moving mechanism according to a fifth aspect of the present invention or an air conditioner indoor unit according to an eleventh aspect of the present invention relates to either the filter moving mechanism according to the first, third or fourth aspect or the air conditioner indoor unit according to the second, ninth or tenth aspect, and wherein the u-turn part is configured to be rotated in conjunction with moving of the filter.

According to either the filter moving mechanism of the fifth aspect or the air conditioner indoor unit of the eleventh aspect, the u-turn member is rotated in conjunction with the filter. Therefore, excess stress can be prevented from acting on the filter from the u-turn member, while the filter becomes less easily damaged. Further, an extra driving mechanism is not required, and thereby, the structure will be simplified.

Either a filter moving mechanism according to a sixth aspect of the present invention or an air conditioner indoor unit according to a twelfth aspect of the present invention relates to either the filter moving mechanism according to the first, third, fourth or fifth aspect or the air conditioner indoor unit according to the second, ninth, tenth or eleventh aspect, and wherein the folding-back member is a rod-shaped member including the at least one protruded portion formed in a strip shape and the at least one non-protruded portion formed in a strip shape.

According to either the filter moving mechanism of the sixth aspect of the present invention or the air conditioner indoor unit of the twelfth aspect of the present invention, it is possible to uniformly apply a force to the filter in the longitudinal direction of the rod-shaped member by means of the strip-shaped protruded portion and the strip-shaped non-protruded portion.

Either a filter moving mechanism according to a seventh aspect of the present invention or an air conditioner indoor unit according to a thirteenth aspect of the present invention relates to either the filter moving mechanism according to the sixth aspect or the air conditioner indoor unit according to the twelfth aspect, and wherein the rod-shaped member is an end roller including: a base part in which the at least one protruded portion and the at least one non-protruded portion are formed; and a rotational shaft formed as a single member together with the base part.

According to either the filter moving mechanism of the seventh aspect of the present invention or the air conditioner indoor unit of the thirteenth aspect of the present invention, the u-turn member is formed by a one-piece part including the base part and the rotational shaft and can be thereby provided at a low cost.

Either a filter moving mechanism according to an eighth aspect of the present invention or an air conditioner indoor unit according to a fourteenth aspect of the present invention relates to either the filter moving mechanism according to the first, third, fourth, fifth, sixth or seventh aspect or the air conditioner indoor unit according to the second, ninth, tenth, eleventh, twelfth or thirteenth aspect, and further includes a guide member having a beam that the folding-back member is attached to an end thereof and that allows the filter to move along therewith. The beam is preferably curved and a support frame is preferably provided for allowing the filter to move along the curved beam.

According to the filter moving mechanism of the eighth aspect of the present invention or the air conditioner indoor unit of the fourteenth aspect of the present invention, the guide member has the beam with both of the function of allowing the filter to move along therewith and the function as an attachment portion of the u-turn member. It is thereby possible to compactly put the functions of the filter moving mechanism together.

An air conditioner indoor unit according to a sixteenth aspect relates to the air conditioner indoor unit according to the second, ninth, tenth, eleventh, twelfth, thirteenth or fourteenth aspect, and wherein the driving part includes a driving roller; and the filter is an endless band-like member, which is disposed between the u-turn member and the driving roller, and on a part thereof, has a high stiffness portion having a stiffness higher than a stiffness of the other part of the endless band-like member.

According to the air conditioner indoor unit of the fifteenth aspect, the u-turn member and the driving roller can apply a tension to the endless band-like filter, and the high stiffness portion can be easily folded back while occurrence of slipping can be prevented between the filter and the driving roller.

An air conditioner indoor unit according to a sixteenth aspect relates to the air conditioner indoor unit according to the fifteenth aspect, and wherein the filter is formed in an endless band shape by welding end portions of a net made of plastic.

According to the air conditioner indoor unit of the sixteenth aspect, the endless band-like filter can be easily formed by means of welding and required cost can be suppressed low.

### <Advantageous Effects of Invention>

In either the filter moving mechanism according to the first aspect of the present invention or the air conditioner indoor unit according to the second aspect of the present invention, it is possible to reduce the force required for the driving part to drive the filter and reduce the size of the filter moving mechanism.

In either the filter moving mechanism according to the third aspect of the present invention or the air conditioner indoor unit according to the ninth aspect of the present invention, it becomes easy to smoothly move the filter even in the configuration that the u-turn member is frequently rotaled, and therefore, the application field thereof can be extended.

In either the filter moving mechanism according to the fourth aspect of the present invention or the air conditioner indoor unit according to the tenth aspect of the present invention, it becomes easier to reduce the size of the filter moving mechanism by suppressing variation in tension of the filter.

In either the filter moving mechanism according to the fifth aspect of the present invention or the air conditioner indoor unit according to the eleventh aspect of the present invention, an excess force can be prevented from acting on the filter with a simple structure, and it becomes easier to reduce the size of the filter moving mechanism.

In either the filter moving mechanism according to the sixth aspect of the present invention or the air conditioner indoor unit according to the twelfth aspect of the present invention, the filter becomes less easily displaced in the longitudinal direction of the rod-shaped member, i.e., the u-turn member.

In either the filter moving mechanism according to the seventh aspect of the present invention or the air conditioner indoor unit according to the thirteenth aspect of the present invention, the u-turn member can be obtained at a low cost, and the cost required for obtaining the filter moving mechanism can be suppressed.

In either the filter moving mechanism according to the eighth aspect of the present invention or the air conditioner indoor unit according to the fourteenth aspect of the present invention, it becomes easy reduce the size of the filter moving mechanism.

In the air conditioner indoor unit according to the fifteenth aspect of the present invention, it becomes easy to smoothly execute a turning-back motion.

In the air conditioner indoor unit according to the sixteenth aspect of the present invention, cost increase can be easily suppressed.

### BREEF DESCRIPTION OF THE DRAWINGS

FIG 1 is a cross-sectional view of an air conditioner indoor unit according to an exemplary embodiment.
FIG 2 is a perspective view of the appearance of an air filter.
FIG 3 is a plan view of the air filter illustrated in FIG 2.
FIG 4 is an exploded view of a filter cleaning device according to the exemplary embodiment
FIG 5 is an exploded view of a filter assembly according to the exemplary embodiment.
FIG. 6 is a plan view of the filter assembly of FIG. 5.
FIG 7 is a front view of an end roller.
FIG 8 is a side view of the end roller.
FIG 9 includes: a side view (a) illustrating a rotational motion of the end roller; a side view (b) illustrating a rotational motion of the end roller; a side view (c) illustrating a rotational motion of the end roller; a side view (d) illustrating a rotational motion of the end roller; and a side view (e) illustrating a rotational motion of the end roller.
FIG 10 is a plan view of an under cover.
FIG. 11 is a front view of the under cover.
FIG. 12 is a cross-sectional view taken along a line I-I in FIG. 8.
FIG 13 is a perspective view of an assist roller.
FIG 14 is a front view of the assist roller.
FIG. 15 is a perspective view of a support member of the assist roller.

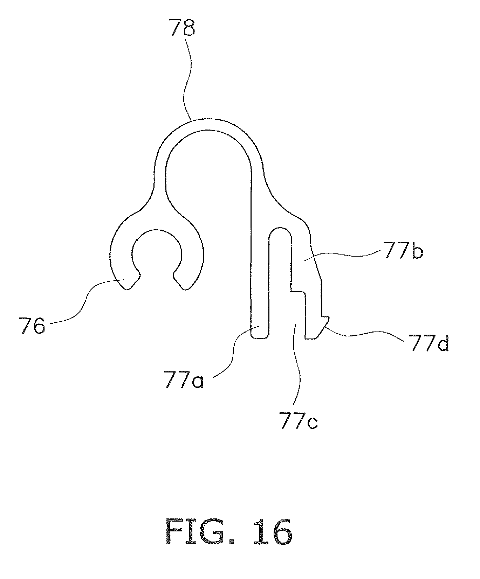

FIG 16 is a side view of the support member of FIG 15.
FIG. 17 is a front view illustrating a support frame to which the filter assembly is attached.
FIG 18 is a cross-sectional view taken along a line II-II in FIG 17.
FIG. 19 is a front view of a fixture.
FIG. 20 is a partial enlarged perspective view of the filter assembly
FIG. 21 is a partial enlarged perspective view of the support frame.
FIG. 22 is a cross-sectional view taken along a line III-III in FIG. 17.
FIG. 23 includes: a side view (a) illustrating another structure of the end roller and a side view (b) illustrating a turned-back state on the end roller.
FIG 24 is a side view of yet another structure of the end roller.

### DESCRIPTION OF EMBODIMENTS

An exemplary embodiment of the present invention will be explained with reference to the drawings. It should be noted that the following exemplary embodiment is a specific example of the present invention and is not intended to limit the technical scope of the present invention.

### (1) Air Conditioner Indoor Unit

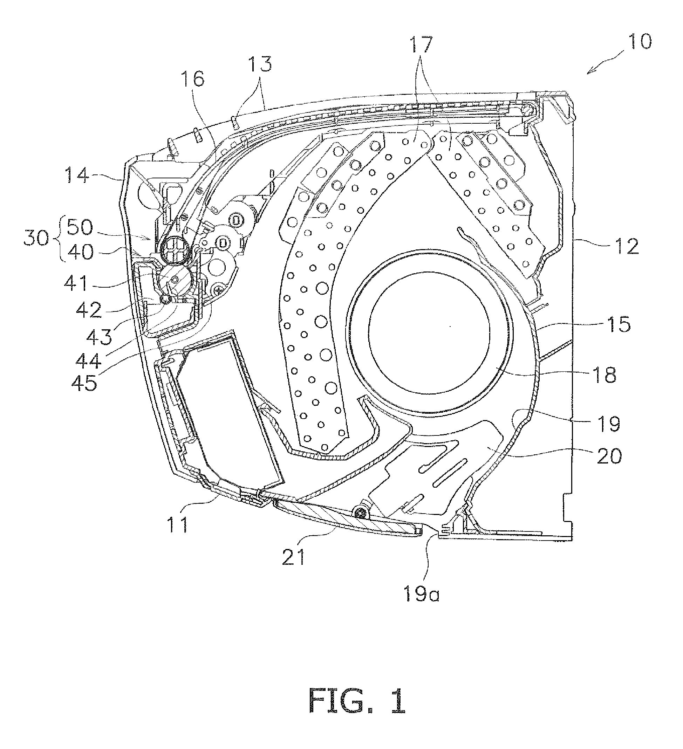

Using FIG 1, schematic explanation will be provided for an air conditioner indoor unit FIG. 1 is a cross-sectional view of the air conditioner indoor unit equipped with a filter moving mechanism according to an exemplary embodiment of the present invention. In FIG 1, the air conditioner indoor unit 10 has an outer shell mainly formed by: a main body casing 11 covering the top surface, the front surface, the lateral surfaces and the bottom surface thereof; and a rear surface plate 12 covering the rear surface thereof A grill 13 is formed on the top surface of the main body casing 11, whereas a front surface panel 14 is attached to the front surface of the main body casing 11. Further, the main body casing 11 and the rear surface plate 12 are attached to a main body frame 15.

Air filters 16 are disposed below the grill 13 within the main body. The indoor air, inhaled through the grill 13, passes through the air filters 16 and dirt and dust contained therein are removed.

An indoor heat exchanger 17 is disposed downstream of the air filters 16. This indoor heat exchanger 17 is attached to the main body frame 15. The indoor heat exchanger 17 is configured to regulate the temperature and the humidity of the indoor air that was inhaled through the grill 13 and then passed through the air filters 16 when the indoor air passes therethrough. In the air conditioner indoor unit 10, the indoor air is produced as a conditioned air after passing through the indoor heat exchanger 17.

A cross flow fan 18 is disposed below the indoor heat exchanger 17. The cross flow fan 18 is attached to the main body frame 15. In cooperation with the scroll structure of the main body frame 14, the cross flow fan 18 generates an air stream downwardly flowing from the indoor heat exchanger 17 to a blower path 19.

A vertical flap 20 is mounted inside the blower path 19, whereas a horizontal flap 21 is mounted at a blower port 19a as the exit of the blower path 19. The conditioned air is directed to the blower path 19 by the cross flow fan 18, and the blown direction thereof is regulated by the vertical flag 20 and the horizontal flap 21.

### (1-1) Air Filters

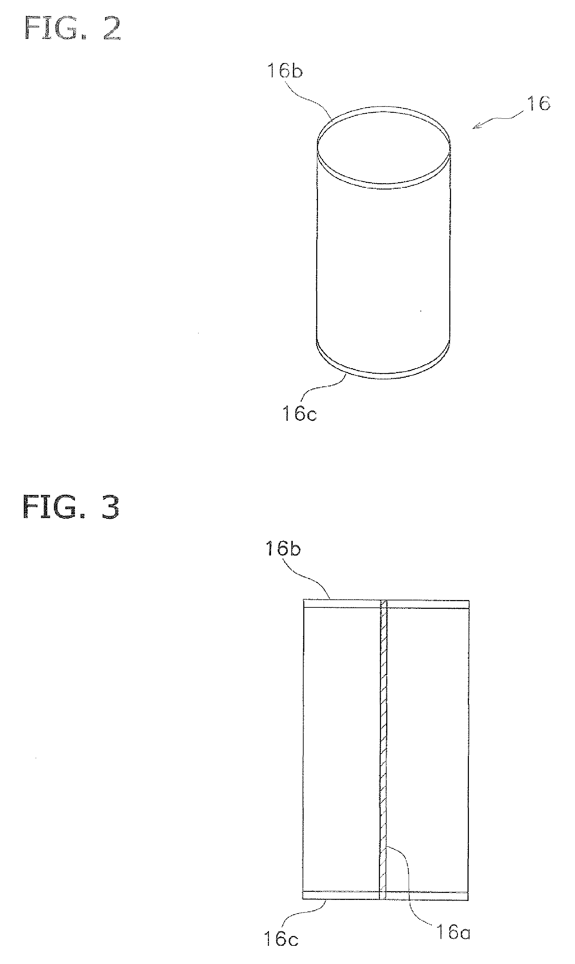

FIGS. 2 and 3 illustrate the structure of each air filter 16. The air filter 16 is fabricated by a sheet of net with several tens of meshes, which is formed by vertical and horizontal polyethylene terephthalate threads with several tens of deniers. The net is a tubular member fonned by fixing the both ends thereof overlapped by roughly 5 to 10 mm by means of ultrasonic welding. Therefore, a high stiffness portion 16a, formed as a result of welding, has a stiffness greater than that of the other portion. To prevent the threads from being unloosen and unwoven, a thermal processing is executed for the portions (having a width of roughly 5 to 10 mm) adjacent to two sides 16b and 16c of this endless band-like air filter 16.

### (2) Filter Cleaning Device

As illustrated in FIG 1, each air filter 16 is attached in an annular shape in a side view, and is configured to be moved on an endless loop in cleaning. The air conditioner indoor unit 10 includes a filter cleaning device 30 for thus simultaneously moving and automatically cleaning the air filters 16. The filter cleaning device 30 is mainly formed by a dirt and dust removing mechanism 40 and a filter moving mechanism 50.

### (2-1) Dirt and Dust Removing Mechanism

As illustrated in FIG 1, the dirt and dust removing mechanism 40 includes a brush 41, a dust box 42, a comb part 44, a compression roller 43 and a brush driving motor to be described. The brush 41 has a large number of relatively long hair elements transplanted therein. The brush 41 is configured to be driven and rotated by the brush driving motor, and the hair elements accordingly scrape the air filters 16 for scraping dirt and dust off the air filters 16.

The dirt and dust, scraped off by the brush 41, are accumulated in the dust box 42. Once getting stuck among the hair elements of the brush 41, dirt and dust cannot be easily separated from the brush 41. Therefore, such dirt and dust are combed and dropped by the comb part 44. The compression roller 43 is herein configured to be rotated and compresses the dirt and dust for accumulating a large amount of dirt and dust in the dust box 42.

### (2-2) Filter Moving Mechanism

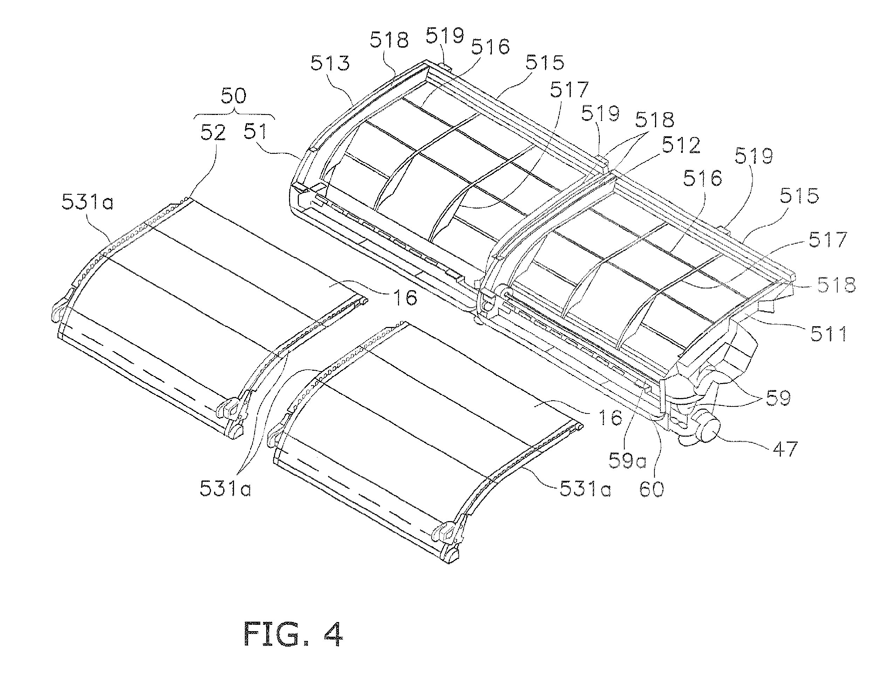

As illustrated in FIG 4, the filter moving mechanism 50 is mainly formed by a support frame 51 and parts of filter assemblies 52 except for the air filters 16. Two filter assemblies 52 are attached to the single support frame 51.

### (a) Guide Frames

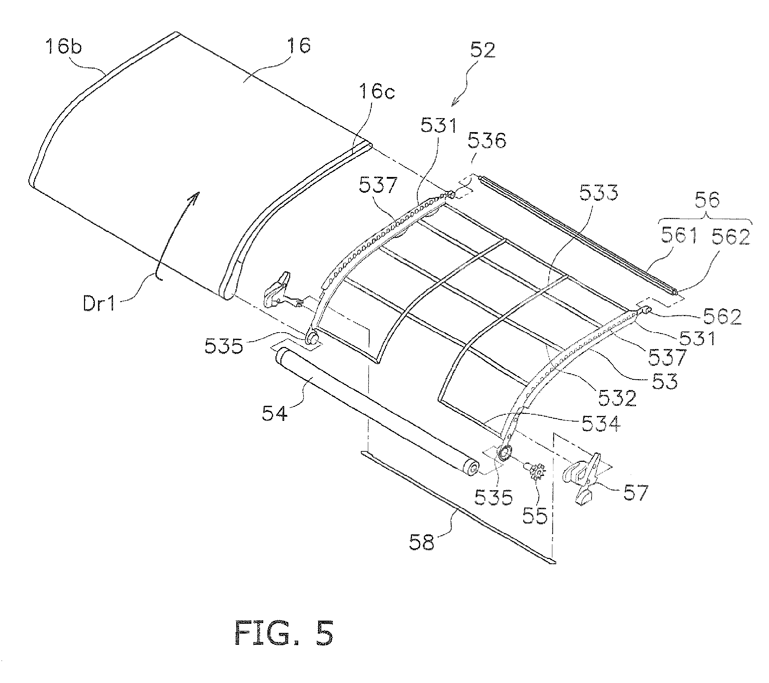

FIG 5 illustrates an exploded view of each filter assembly 52. In a guide frame 53, a plurality of horizontal rods 532 are bridged over two wide beams 531. The beams 531 are curvedly formed in a side view. Further, a plurality of vertical rods 533 are vertically attached to the horizontal rods 532. Thus, lattices are assembled by the plural horizontal rods 532 and the plural vertical rods 533. Accordingly, the shape of the guide frame 53 can be maintained while ventilation resistance of the indoor air can be suppressed low. Further, such members as horizontal rods 534 connecting the vertical rods 533 and the beams 531 are also provided.

The two beams 531 of the guide frame 53 are herein curved in a side view, because the air filters 16 and the filter moving mechanism 50 are disposed from a position behind the front surface panel 14 to a position below the top side grill 13 in the air conditioner indoor unit 10 as illustrated in FIG 1. The area of each air filter 16 is increased by thus curving the beams 531. When the flow amount of the indoor air passing through each air filter 16 is constant, the flow speed of the indoor air passing through the air filter 16 is reduced by the amount of increase in the area of the air filter 16. Therefore, the structure is advantageous in achieving removal of dirt and dust and reduction in ventilation resistance. However, the structure will be disadvantageous for reduction in size of the air conditioner indoor unit 10 unless the air filters 16 are moved along these curved beams 531. In view of this, the support frame 51 supports the air filters 16 from below, whereby the air filters 16 are moved along the beams 531 while being curved.

### (b) Driving Rollers and End Rollers

Ring-shaped support portions 535 are respectively disposed on the front surface side end portions of the two beams 531 of each guide frame 53 in order to attach thereto a driving roller 54. The driving roller 54 is structured so that a part as the core thereof has a cross-sectional shape formed by a plurality of parallel ribs but the surface is formed in a roughly circular cross-sectional shape. To form the surface in such a roughly circular cross-sectional shape, a film with short hair elements standing upright is spirally wrapped onto the surface of the driving roller 54. For example, short fibers (piles) are used as the hair elements. The driving roller 54 is rotatable while being supposed by the support portions 535. A driven gear 55 is fitted into the driving roller 54. The driven gear 55 is configured to transfer the rotation of a roller driving motor to be described to the driving roller 54.

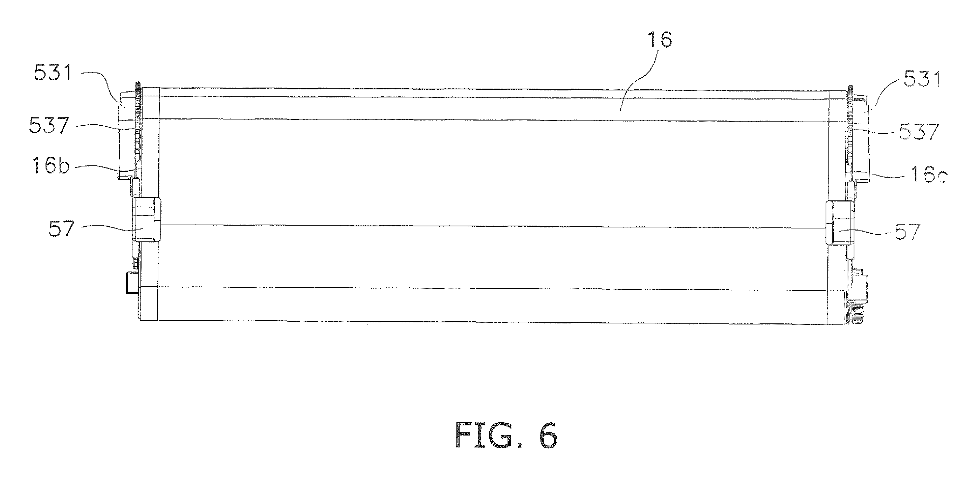

Each air filter 16, formed in an endless band shape, is wrapped over the driving roller 54 and an end roller 56. The two beams 531 are respectively provided with a plurality of protrusions 537 for guiding the wrapped air filters 16. The protrusions 537 are linearly aligned from the front surface side to the rear surface side in a plan view. The two sides 16b and 16c, arranged along a moving direction Dr1 of each air filter 16, are guided along the alignment direction of the plural protrusions 537 (see FIG 6). Further, the portions adjacent to the two sides 16b and 16c of each air filter 16 are moved on the two beams 531.

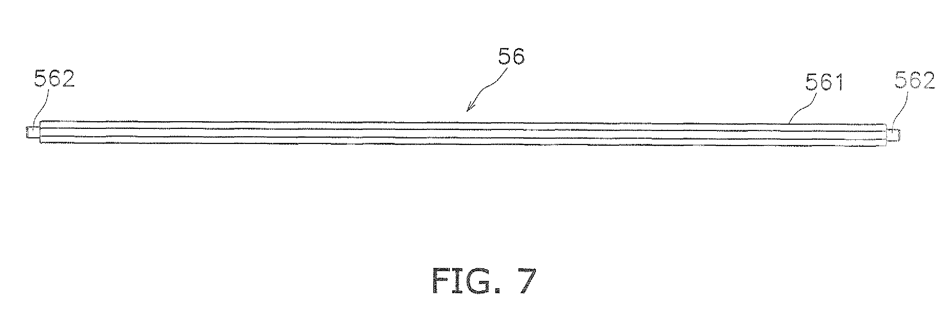

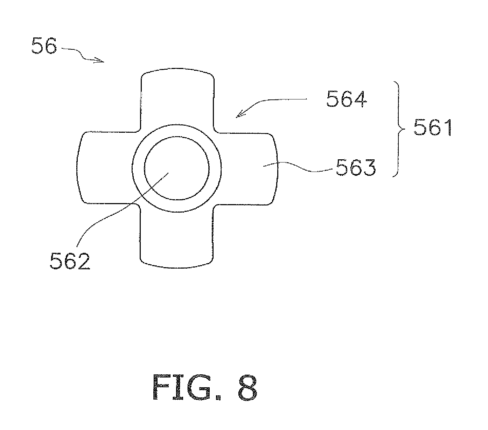

The two beams 531 of each guide frame 53 have openings 536 bored in the rear surface side end portions thereof in order to attach thereto the end roller 56. FIG 7 illustrates a plan view of the end roller 56, whereas FIG 8 illustrates an enlarged side view of the end roller 56. The end roller 56 is an integrally molded rod-shaped member made of resin, for instance, and is formed by a base part 561 with a cross-section formed in a roughly crisscross shape and a rotational shaft 562 with a cross-section formed in a circular shape. The roughly crisscross-shaped base part 561, making contact with each air filter 16, has four strip-shaped protruded portions 563 respectively having corners molded in an arc-like shape, whereby each air filter 16 is configured to receive less pressure from the base part 561. Roots among these four strip-shaped protruded portions 563 are formed as non-protruded portions 564. The rotational shaft 562 of the end roller 56 is fitted into the openings 536. With the structure, the end roller 56 is rotatable while being supported by the two beams 531.

As explained using FIGS. 2 and 3, each air filter 16 has the high stiffness portion 16a, which is formed by welding the overlapped portions when the air filter 16 is formed in an endless band shape.

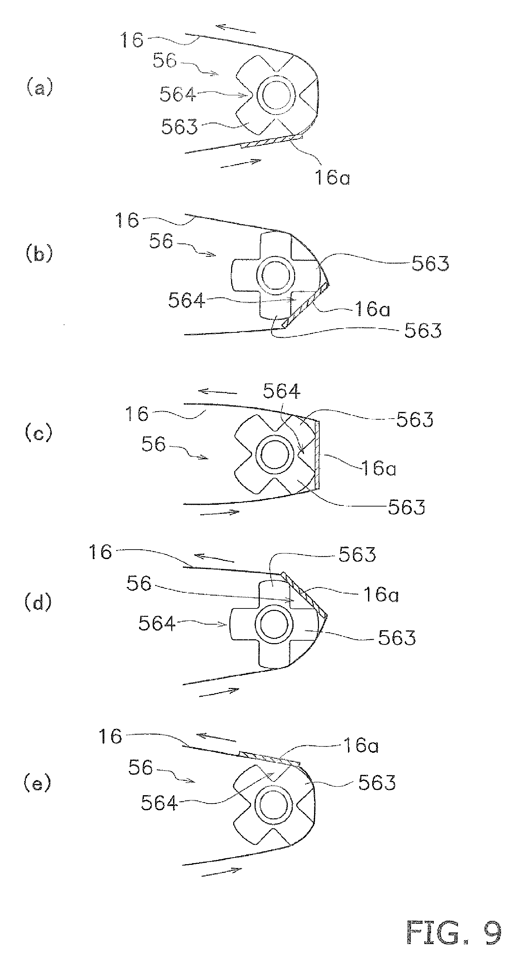

As illustrated in FIGS. 9(a) to 9(e), the end roller 56 is configured to be rotated when the high stiffness portion 16a passes through the end roller 56. The torque of the driving roller 54, required when the high stiffness portion 16a passes through the end roller 56, is suppressed low by thus rotating the end roller 56. With such structure, it is possible to suppress low the torque applied to each air filter 16 by the driving roller 54 when the high stiffness portion 16a passes over and through the end roller 56. Accordingly, it is possible to compactly form the roller driving motor for driving the driving roller 54.

Using FIG 9, a little more detailed explanation will be provided as follows regarding a state when the high stiffness portion 16a passes through the end roller 56. Such a case as illustrated in FIG 9(a) is assumed that the four strip-shaped protruded portions 563 of the end roller 56 are slanted at an angle of 45 degrees in a counter-clockwise direction with respect to the vertical direction and the horizontal direction. When it is required to move each air filter 16 and simultaneously specify the position of the high stiffness portion 16a of the air filter 16, components such as a sensor are required and the filter moving mechanism will be expensive. To structure the filter moving mechanism 50 at a low cost, each air filter 16 is configured to circulate in the counter-clockwise direction as depicted with arrows without managing the position of the high stiffness portion 16a.

Before the state of FIG 9(a) is produced, i.e., when a part of each air filter 16 except for the high stiffness portion 16a passes through the end roller 56, the air filter 16 is slid and moved on the end roller 56 and is then turned back almost without rotating the end roller 56.

When the high stiffness portion 16a of each air filter 16 makes contact with one of the protruded portions 563 as illustrated in FIG 9(a), the end roller 56 is pressed by the high stiffness portion 16a and is accordingly started rotating. When each air filter 16 further circulates, the state of FIG. 9(b) is produced and the high stiffness portion 16a is overlaid on two of the strip-shaped protruded portions 563. At this time, a part of each air filter 16, surrounding the high stiffness portion 16a, is deformed, although the high stiffness portion 16a is hardly deformed. Thus, the force to deform the high stiffness portion 16a can be eliminated, and thereby, the torque of the driving roller 54 can be suppressed low.

As illustrated in FIGS. 9(c) and 9(d), the end roller 56 is subsequently rotated and each air filter 16 is thereby further circulated. Because of this, it is the force to rotate the end roller 56 that is herein required, and the force applied to each air filter 16 by the driving roller 54 is further reduced than the case that each air filter 16 is circulated while the high stiffness portion 16a of the air filter 16 is deformed.

Then, the end roller 56 is stopped rotating when the high stiffness portion 16a is rotated with the least force to a position away from the end roller 56 (FIG 9(e)), and subsequently, each air filter 16 is again slid on the end roller 56.

In the aforementioned explanation, the case has been described that the end roller 56 is rotated when the moving direction of the high stiffness portion 16a is turned back at the end roller 56. However, it is not required to configure the end roller 56 to be always rotated when the moving direction of the high stiffness portion 16a is furned back, and the high stiffness portion 16a may be slid on the end roller 56. An important fact is to prevent the end roller 56 from applying to each air filter 16 a force greater than the torque required for rotating the end roller 56. Therefore, when only a force less than the torque required for rotating the end roller 56 is produced due to sliding of the high stiffness portion 16a, a structure can be produced that sliding of the high stiffness portion 16a is also allowed while the end roller 56 is stopped rotating.

### (c) Knob Members

As illustrated in FIGS. 5 and 6, two knob members 57 are respectively fixed to the two beams 531 of each guide frame 53. The knob members 57 are provided as places to be held in attaching each filter assembly 52 to the support frame 51. The stiffness of the knob members57 and the surrounding thereof is enhanced by connecting the two knob members 57 through a reinforcing rod 58 in order to prevent each filter assembly 52 from being distorted in holding these knob members 57.

### (d) Support Frame

The support frame 51 illustrated in FIG 4 is attached to the main body frame 15 illustrated in FIG. 1. Therefore, the support frame 51 is provided with tab portions 519 and so forth for holding the support frame 51 with respect to the main body frame 15. The support frame 51 is provided with a right side member 511, a center member 512 and a left side member 513, which are sequentially disposed from the viewer's right side in parallel to each other. The right side member 511 and the center member 512 are connected through a beam 515 and a plurality of horizontal rods 516. Likewise, the center member 512 and the left side member 513 are connected through another beam 515 and the other horizontal rods 516. A plurality of reinforcing members 517, each of which is formed by vertical rods and plates, are provided while being vertically intersecting with the plural horizontal rods 516 in a plan view.

The filter assemblies 52 are attached to the support frame 51 so that the air filters 16 pass over the horizontal rods 516 and the reinforcing members 517 of the support frame 51. Accordingly, the air filters 16 can be circulated so that the lower sides of the air filters 16 are arranged along the guide frames 53 while being supported by the horizontal rods 516 and the reinforcing members 517.

To attach the filter assemblies 52 to the support frame 51, guide rails 518 are respectively disposed on the upper portions of the right side member 511, the center member 512 and the left side member 513 of the support frame 51. Lateral end portions 531a of the two beams 531 of each guide frame 53 can be slid and fitted into the guide rails 518. The guide rails 518 are also curved, and therefore, the beams 531 of each guide frame 53 are made of soft resin so that they can be bent when fitted into the guide rails 518.

Two roller driving motors 59 are attached to the support flame 51 in order to drive the two driving roller 54. Driving gears (not illustrated in the figures) are driven by the roller driving motors 59. It should be noted that, as illustrated in FIG 4, a driving shaft 59a is extended from one of the roller driving motors 59 for driving the driving gears attached to the viewer's left side. The driving gears are meshed with the driven gears 55, and thereby, the torque of the roller driving motors 59 can be transferred to the driving roller 55. Further, a single brush driving motor 47 is attached to the support frame 51.

### (e) Under Cover

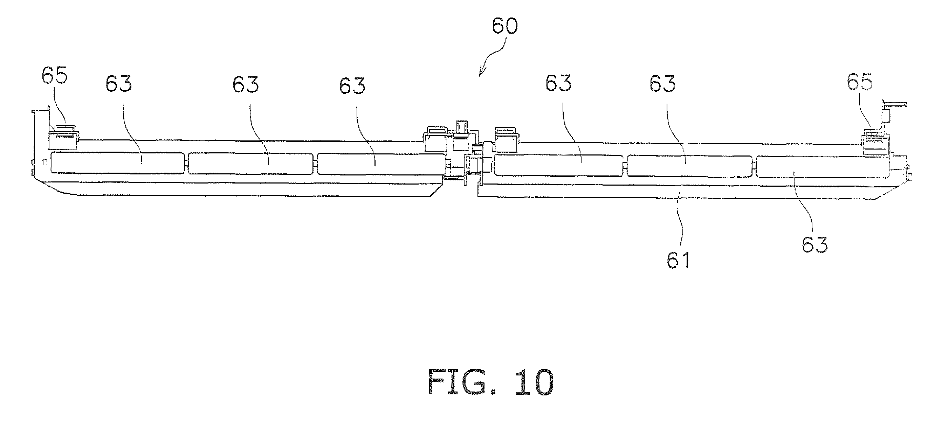

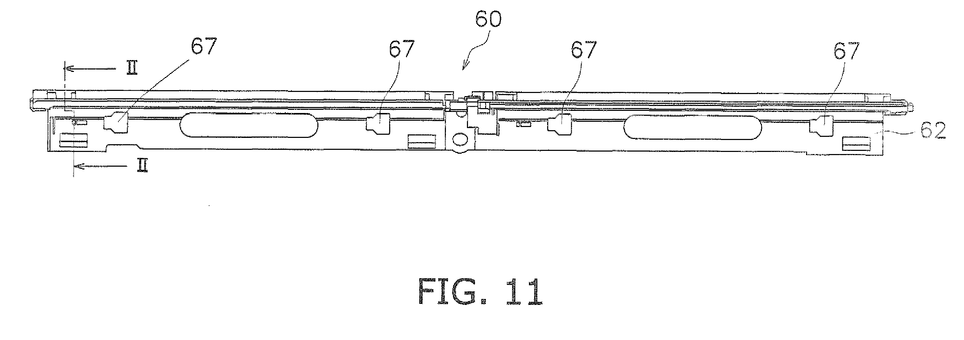

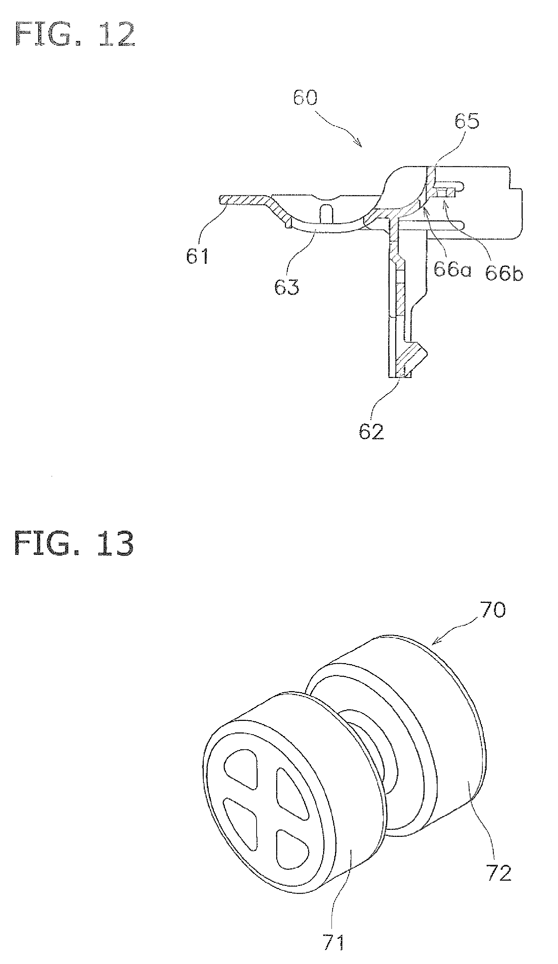

As illustrated in FIG 4, an under cover 60 is attached to the bottom portion of the support frame 51 in order to cover the bottom side of the air filters 16 turned back in a U-shape along the driving rollers 54. FIG 10 is a plan view of the under cover 60. FIG 11 is a front view of the under cover 60. FIG 12 is a cross-sectional view of FIG 11 taken along a line I-I.

The under cover 60 is formed by a cover portion 61 extended in the horizontal direction and a wall portion 62 extended in the vertical direction. The cover portion 61 has a dent with a circular-arc cross-section formed along the shape of the driving rollers 54, and six openings 63 are formed within the dent The brush 41 illustrated in FIG. 1 is disposed below the under cover 60, and the hair elements of the brush 41 make contact with the air filters 16 through the openings 63.

Assist rollers to be described are attached to the under cover 60. Each assist roller is attached thereto using an overhang portion 65 and two openings 66a and 66b, which are illustrated in FIG 12. As illustrated in FIG 10, four overhang portions 65 are separately disposed in the right-and-left direction, and four assist rollers are attached thereto.

Further, a brush cover 45 (see FIG 1), forming a part of the dust box 42, is attached to the under cover 60. The brush cover 45 has hooks integrally formed with the rear surface thereof, and is fixed by hooking the hooks in openings 67 of the under cover 60.

### (f) Assist Rollers

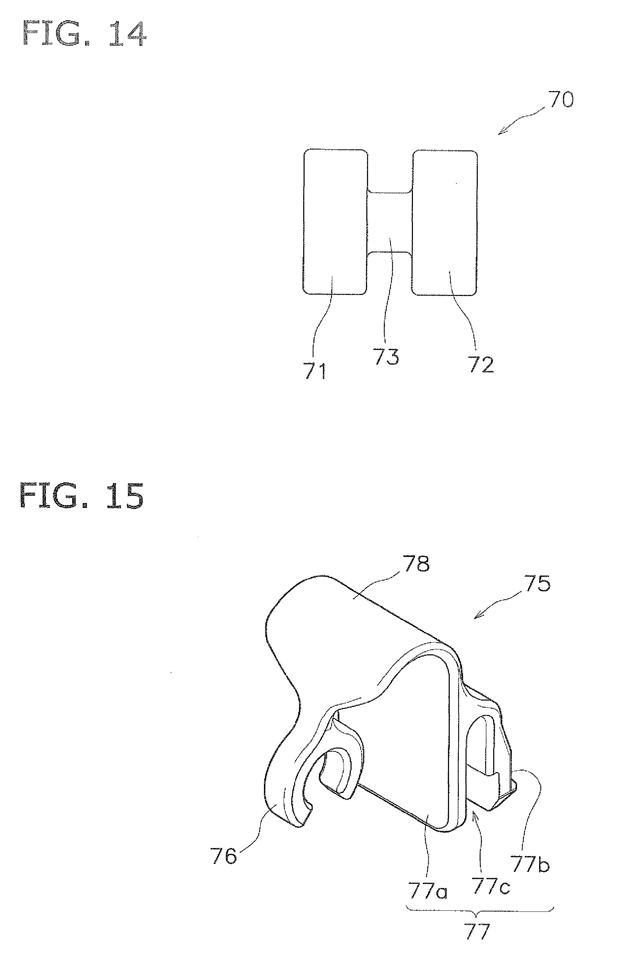

FIG 13 is a perspective view of each assist roller 70, whereas FIG. 14 is a plan view of each assist roller 70. The assist roller 70 is formed by two cylindrical roller portions 71 and 72, each of which includes a crisscross hub in the inside thereof, and a rotational shaft 73 connecting the roller portions 71 and 72.

Each assist roller 70 is fixed to the overhang portion 65 and the openings 66a and 66b of the under cover 60 by means of a support member 75 illustrated in FIG 15. The support member 75 is formed by: a shaft receiver part 76 to be fitted onto the rotational shaft 73 of the assist roller 70; a fitting part 77 to be fitted with the overhang portion 65 and the openings 66a and 66b; and a connecting part 78 connecting the shaft receiver part 76 and the fitting part 77. The fitting part 77 has: a projecting portion 77a to be inserted into the opening 66a of the under cover 60; a projecting portion 77b to be inserted into the opening 66b; and a recessed portion 77c in which the overhang portion 65 of the under cover 60 is fitted. The projecting portion 77b is provided with a projection 77d so that the support member 75 is prevented from being detached from the under cover 60 after being fitted therewith.

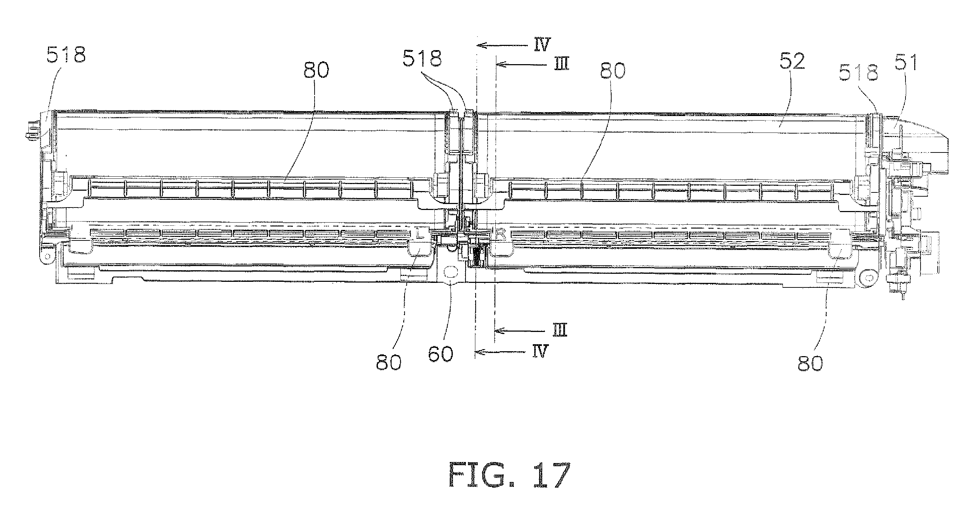

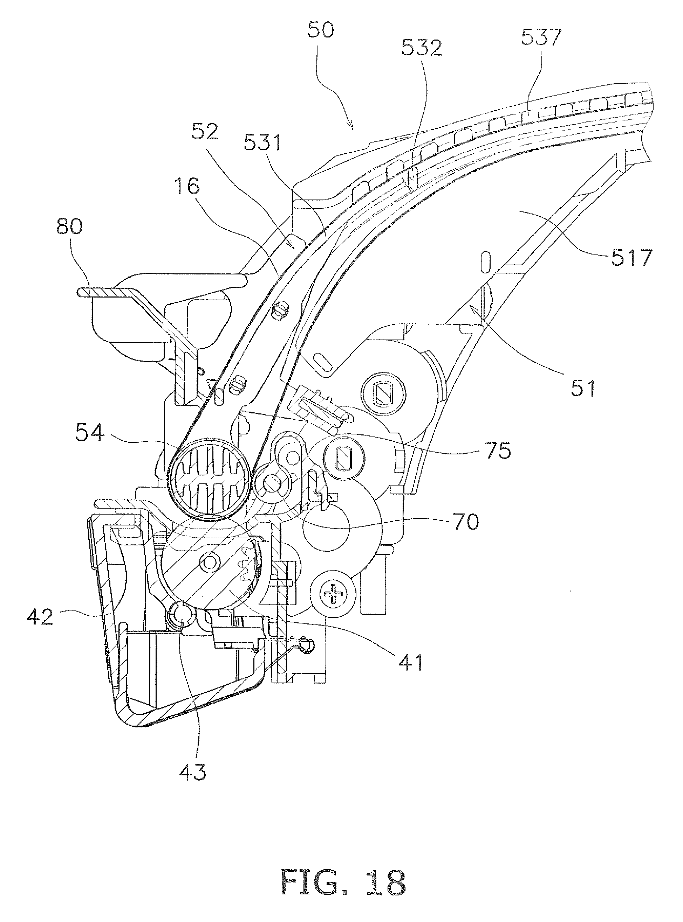

FIG. 17 is a front view illustrating a state that the filter assemblies 52 are attached to the support frame 51, whereas FIG. 18 is a cross-sectional view of FIG 17 taken along a line III-III. In FIG. 17, fixtures 80 of a fixed state are depicted with solid lines, whereas the fixtures 80 of an unfixed state are depicted with dashed two-dotted lines. It should be noted that FIG. 18 omits illustration of the fixtures 80 of the unfixed state depicted with the dashed two-dotted lines and the filter assemblies 52 of the unfixed state corresponding to the fixtures 80 of the unfixed state.

As illustrated in FIG 18, the assist rollers 70 are configured to press the air filters 16 towards the driving rollers 54 while the filter assemblies 52 are attached to the support frame 51. Accordingly, the air filters 16 are pinched between the assist rollers 70 and the driving rollers 54. Therefore, it is possible to prevent occurrence of troubles attributed to, for instance, occurrence of slipping between the air filters 16 and the driving rollers 54, in cleaning the air filters 16.

For allowing the assist rollers 70 to press the air filters 16 towards the driving rollers 54 with an appropriate force, each connecting part 78 is molded to have a cross-section formed in a arch-shape in a side view while being thinly molded so as to be elastically deformed easily. Each connecting part 78 is made of polypropylene so as to easily sag, and simultaneously, be less-easily damaged or broken even with repetition of deformation.

Each shaft receiver part 76 is molded to have a cross-section formed in a roughly C-shape with a cut-out portion faced downwards, and the rotational shaft 73 of each assist roller 70 is forcedly fitted therein. The inner diameter of the shaft receiver part 76 is greater than the rotational shaft 73 of the assist roller 70 by roughly 0.2 mm. After the rotational shaft 73 is fitted into the shaft receiver part 76, each assist roller 70 is rotatable with a very slight force without wobbling of the rotational shaft thereof.

### (g) Fixtures

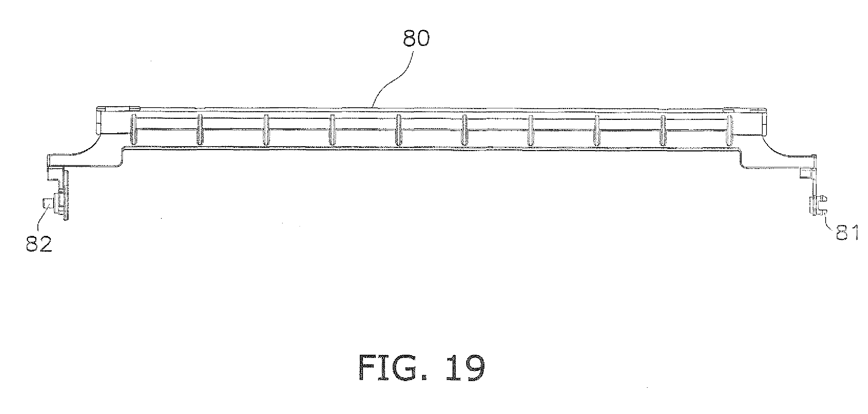

As described above, the assist rollers 70 press the driving rollers 54 by means of elastic deformation of the connecting parts 78 of the support members 75. Therefore, the fixtures 80, fixing the filter assemblies 52 while the connecting parts 78 of the assist rollers 70 are elastically deformed, are attached to the support frame 51 so that the positions of the filter assemblies 52 are prevented from being changed even when the driving rollers 54 are pressed by the assist rollers 70 (see FIGS. 17 and 18). FIG 19 is a front view of each fixture 80. Each fixture 80 is configured to be rotated and moved about a single axis, and two fitting portions 81 and 82 arranged on the axis are fitted into the support frame 51. To enable the fixture 80 to be rotated and moved, these two fitting portions 81 and 82 are molded to have a cross-section formed by the combination of circles or circular-arcs.

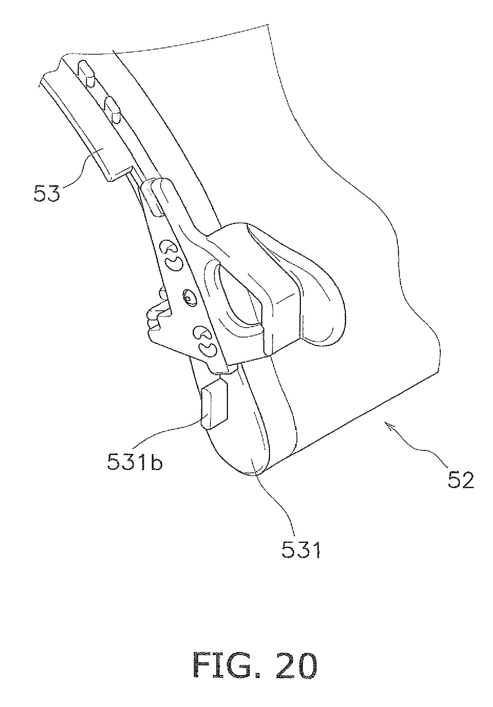

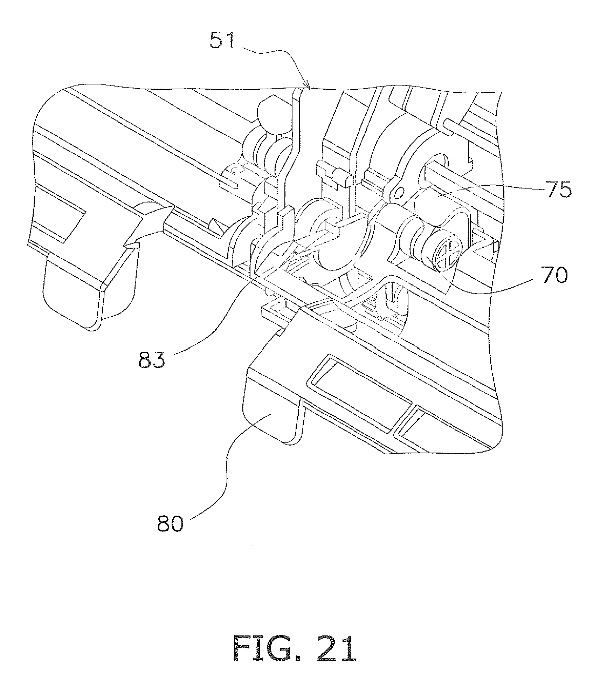

FIG. 20 is a partial enlarged perspective view of each filter assembly. As illustrated in FIG 20, the beams 531 of the guide frame 53 of each filter assembly 52 have fixed portions 531b on the lateral surfaces thereof. FIG 21 is a partial enlarged perspective view of the support frame. FIG 21 illustrates a state that the filter assemblies 52 have not been attached while the fixtures 80 are completely rotated to the front surface side and are thus no longer rotatable to the front surface side. As illustrated in FIG 21, a fixing portion 83 is formed in each fixture 80.

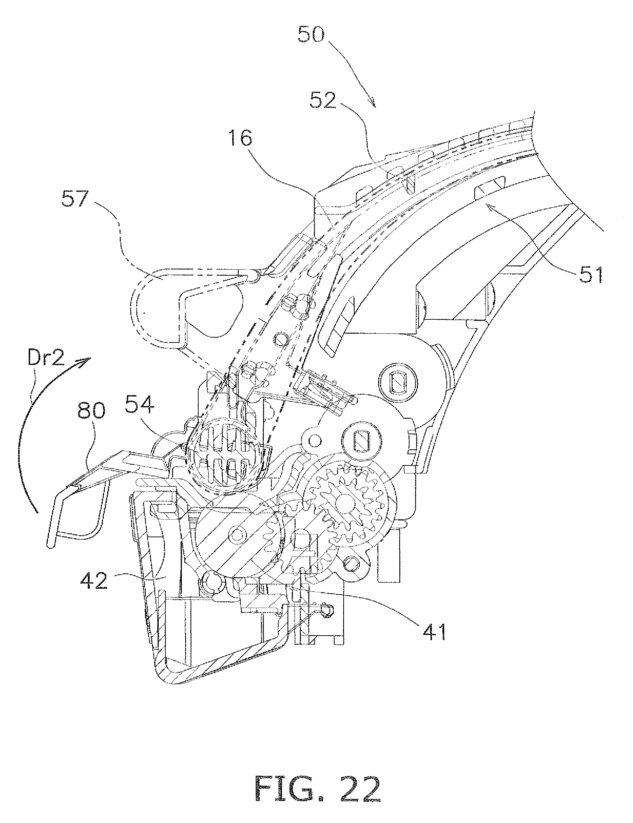

Using FIGS. 18 and 22, explanation will be provided for a situation that the filter assemblies 52 are pressed by the fixtures 80 and are attached to the support frame 51. FIG 22 is a cross-sectional view of FIG 17 taken along a line IV-IV. FIG 22 omits illustration of the fixtures 80 of the fixed state and the filter assemblies 52 corresponding thereto, which are depicted with the solid lines. Instead, FIG. 22 illustrates the fixtures 80 of the unfixed state and the filter assemblies 52 corresponding thereto, which are depicted with the dashed two-dotted lines.

Therefore, FIG 22 illustrates the filter assemblies 52 of a pre-fixed state, whereas FIG 18 illustrates the filter assemblies 52 of a fixed state. Similarly, FIG 22 illustrates the fixtures 80 of a pre-fixed state, whereas FIG. 18 illustrates the fixtures 80 of a fixed state.

As illustrated in FIG 22, the fixtures 80 are lifted up and rotated to the rear surface side (in an arrow direction Dr2), while the lateral end portions 531a of the filter assemblies 52 are inserted into the guide rails 518 of the support frame 51. When the fixtures 80 are rotated, the fixed portions 531b are pressed by the fixing portions 83 of the fixtures 80, and the filter assemblies 52 are entirely pressed to the rear surface side. The lateral end portions 531a of the guide frames 53 are slid while being guided by the guide rails 518. Accordingly, the filter assemblies 52 are pressed while the guide frames 53 are slightly deformed. Then, after fixed to the support frame 51, the filter assemblies 52 are restricted from moving to the front surface side by the fixtures 80. Thus, the filter assemblies 52 are fixed to the support frame 51 by the guide rails 518 and the fixtures 80.

### (3) Filter Cleaning Operation

The air conditioner indoor unit 10 is embedded with a control unit for controlling the filter cleaning device 30, and is configured to execute automatic control under the control of the control unit The control unit counts an operating time of the air conditioner indoor unit 10. A filter cleaning operation is configured to be performed anew when a cumulative operating time reaches a preliminarily set time (e.g., 18 hours) after the previous filter cleaning operation executed by the filter cleaning device 30.

In a filter cleaning operation, each driving roller 54 is rotated in the counter-clockwise direction seen in a direction illustrated in FIG 18. Through the rotation of the driving roller 54, each air filter 16 is circulated in the counter-clockwise direction while being turned back at the driving roller 54 and the end roller 56. At this time, when moving over the guide frame 53 to the front surface side, each air filter 16 is moved while being supported by the beams 531, the horizontal rods 532, the vertical rods 532 and so forth of the guide frame 53. Unlike a conventional structure, the filter moving mechanism 50 is not provided with a member for strengthening the tension of each air filter 16 by strongly pulling or pressing the air filter 16. Therefore, without being supported, each air filter 16 inevitably sags when moving under the guide frame 53 to the rear surface side. The reinforcing members 517 and the horizontal rods 516 of the support frame 51 support each air filter 16 to the extent that a large tension is not produced in the air filter 16 but the air filter 16 does not sag. Accordingly, the lower part of each air filter 16 can also perform a circulation motion in a shape curved along the curving of the beams 531 of the guide frame 53. Each air filter 16 is relatively slowly rotated and is circulated, for instance, once in roughly three minutes.

Thus, the brush 41 is rotated in the counter-clockwise direction while each air filter 16 is moved. Therefore, the hair elements of the brush 41 are moved oppositely to the moving direction of each air filter 16 and scrape dirt and dust off the mesh of the air filter 16. As already explained, the dirt and dust scraped off by the brush 41 are accumulated in the dust box 42 by means of the comb part 44 and the compression roller 43 illustrated in FIG 1.

### (4) Features

### (4-1)

In automatically cleaning each air filter 16 of the air conditioner indoor unit 10, the air filter 16 is slid on and turned back at the end roller 56 (a u-turn member) of the filter moving mechanism 50, while the end roller 56 is normally stopped where forces acting on the protruded portions 563 of the end roller 56 are balanced. Therefore, the force applied to each air filter 16 from the end roller 56 is small in a regular state that the air filter 16 is circulated while being slid on the end roller 56.

When the high stiffness portion 16a of each air filter 16 is overlaid on the end roller 56 while the air filter 16 is circulated by the driving roller 56 and the roller driving motor 59 (a driving part), the end roller 16 is rotated and it is thereby possible to reduce the force applied to the air filter 16 from the end roller 56 in turning back the high stiffness portion 16a. Suppose each end roller 56 is not rotated, a large force is required for allowing the high stiffness portion 16a to pass through the portions of the end roller 56 although required instantaneously. Accordingly, a trouble may be caused that the roller driving motor 59 is stopped.

### (4-2)

As illustrated in FIG. 8, each end roller 56 is structured to be rotationally symmetric about the rotational shaft 562 as the rotational center so that the protruded portions 563 and the non-protruded portions 564 are returned to the same state when the end roller 56 is rotated at an angle of 90 degrees. Thus, the portions 563 and 564 are returned to the same state when each end roller 56 is rotated at an angle of 90 degrees. Therefore, even if the end roller 56 is rotated as illustrated in FIGS. 9(a) to 9(e) when the high stiffness portion 16a of each air filter 16 is turned back, a state is again produced which is closer to a state before the high stiffness portion 16a is turned back. Because of this, even when circulated once and reaching the position of the end roller 56, the high stiffness portion 16a can be turned back with a small force similarly to the previous circulation. Hence, even if each air filter 16 is set to be circulated twice when automatically cleaned, for instance, the high stiffness portion 16a can be turned back with a small force similarly to the case of circulating each air filter 16 once. Consequently, it is no longer required to impose a limitation on the circulation of each air filter 16. Further, the high stiffness portion 16a can be turned back every time in a state roughly similar to that illustrated in FIGS. 9(a) to 9(e), even when the protruded portions 563 of each end roller 56 are not particularly oriented in predetermined directions. Therefore, a force required in turning back the high stiffness portion 16a can be also set to be roughly equal every time.

### (4-3)

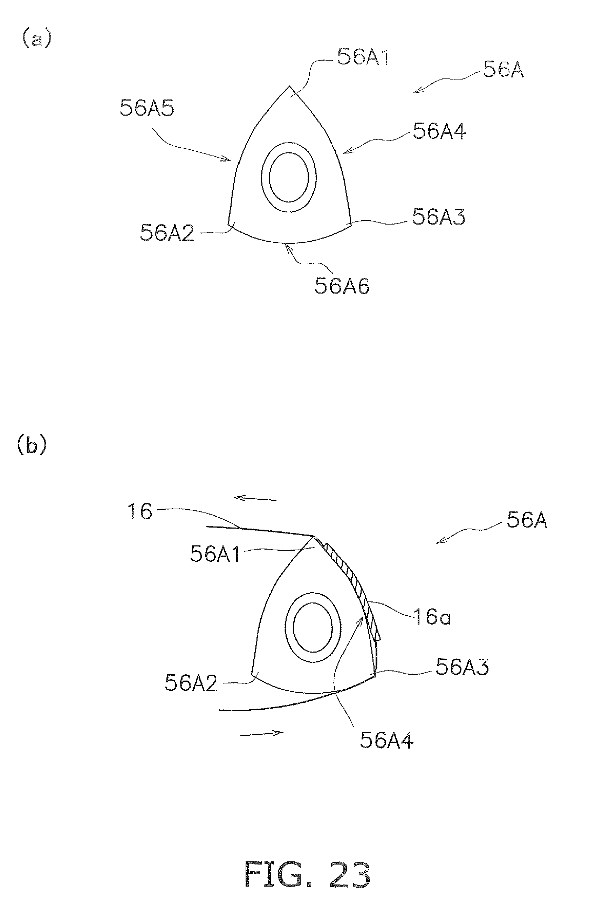

The end roller 56 illustrated in FIG. 8 and an end roller 56A (to be described) illustrated in FIG. 23 respectively have three or more strip-shaped protruded portions 563, 56A1 and three or more strip-shaped non-protruded portions 564, 56A2. For example, as illustrated in FIG. 9(a), where each air filter 16 is configured to be U-turned so that an angle of roughly 180 degrees can be formed between the direction of moving the air filter 16 towards the end roller 56 and the direction of returning the air filter 16 from the end roller 56, the air filter 16 makes contact with two or more of the strip-shaped protruded portions 563 in the structure that the protruded portions 563 and the non-protruded portions 564 are roughly symmetrically disposed. Therefore, regardless of the state of the stopped end roller 56, it is possible to reduce difference in distance that each air filter 16 is U-turned about the end roller 56. For example, when two strip-shaped protruded portions forming an angle of 180 degrees are provided, the distance that each air filter 16 is U-turned about the end roller 56 greatly varies depending on whether the protruded portions are vertically disposed or horizontally disposed. Further, the direction of the force applied to each air filter 16 from the end roller 56 also greatly varies. Thus, by providing three or more strip-shaped protruded portions, the motion of each air filter 16 moving about the end roller 56 can be stabilized and reduction in size of the filter moving mechanism will be easily achieved.

### (4-4)

Each end roller 56 (the folding-back member) is rotated in conjunction with moving of each air filter 16. Therefore, an excess force is configured to less easily act on each air filter 56 compared to the structure that the end roller 56 actively rotates. Further, such structure only supports the end roller 56 in a rotatable state, and is therefore simple and can be easily assembled. As a result, reduction in size of the filter moving mechanism 50 can be easily achieved.

### (5) Modifcations

### (5-1) Modification 1A

In the aforementioned exemplary embodiment, each end roller 56 is formed in a crisscross cross-sectional shape. However, the end roller 56 is not limited to be formed in a crisscross cross-sectional shape. The number of protruded portions of each end roller 56 is preferably three or more. For example, as illustrated in FIG 23(a), the end roller 56 can be structured so that the cross-section thereof is formed in a roughly triangular shape while three sides forming the triangle are slightly bulged outwards. In the case of the end roller 56A formed in such shape, when each air filter 16 is turned back, non-protruded portions 56A4, 56A5 and 56A6 among three strip-shaped protruded portions 56A1, 56A2 and 56A3 are supposed to press the air filter 16 with forces less than those of the protruded portions 56A1, 56A2 and 56A3.

When the high stiffness portion 16a is turned back at each end roller 56A having the aforementioned shape, the end roller 56A is rotated as illustrated in FIG 23(b) while the high stiffness portion 16a makes contact with the non-protruded portions 56A4, 56A5 and 56A6. Therefore, similarly to the aforementioned exemplary embodiment, the high stiffness portion 16a of each air filter 16 is slightly deformed and it is possible to reduce a force in turning back the high stiffness portion 16a. In other words, it is possible to achieve advantageous effects similar to those achieved by the aforementioned exemplary embodiment.

### (5-2) Modification 1B

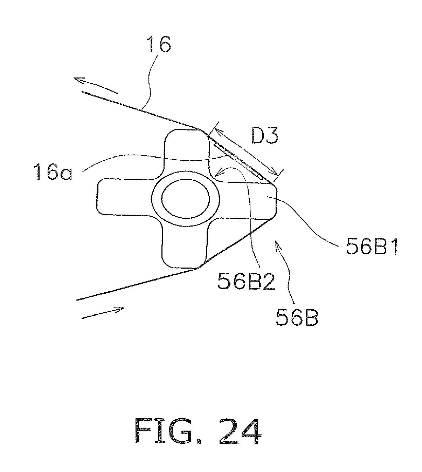

In the aforementioned exemplary embodiment, explanation has been provided for the structure that the high stiffness portion 16a of each air filter 16 is rotated while making contact with the two protruded portions 563 disposed adjacently to each other in turning back the high stiffness portion 16a. However, regarding the part that each air filter 16 is overlaid, the distance between the two protruded portions 563 disposed adjacently to each other is not necessarily required to be less than the dimension of the high stiffness portion 16a. For example, as illustrated in FIG 24, a distance D1 of protruded portions 56B1 disposed adjacently to each other can be set to be greater than the dimension of the high stiffness portion 16a. It should be noted that, as illustrated in FIG 23, non-protruded portions 56B2 illustrated in FIG 24 can be configured to make contact with the high stiffness portion 16a with forces less than those of the protruded portions 56B1.

### (5-3) Modification 1C

In the aforementioned exemplary embodiment, the driving rollers 54 arc configured to be embedded in the filter assemblies 52, and then, the filter assemblies 52 embedded with the driving rollers 54 are configured to be attached to the support frame 51. However, the driving rollers 54 are not necessarily required to be embedded in the filter assemblies 52 and be then attached to the support frame 51, and can be also directly attached thereto together with the air filters 16.

**REFERENCE SIGNS LIST**

| | |
|---|---|
| 10 | Air conditioner indoor unit |
| 50 | Filter moving mechanism |
| 51 | Support frame |
| 52 | Filter assembly |
| 53 | Guide frame |
| 54 | Driving roller |
| 56 | End roller |
| 70 | Assist roller |
| 75 | Support member |
| 78 | Coupling member |
| 80 | Fixture |

### CITATION LIST

### PATENT LITERATURE

PTL 1: Microfilm of Japanese Unexamined Utility Model Publication No. S62-160221

## Claims

1. A filter moving mechanism (50) configured to move a filter (16) for automatic cleaning in an air conditioner indoor unit (10), the filter moving mechanism comprising:
a driving part (54, 59) configured to apply to the filter a force for moving the filter; and
a u-turn member (56, 56A, 56B) for turning back the filter;
wherein the u-turn member is attached in a rotatable state and includes at least one protruded portion (563, 56A1, 56B1) and at least one non-protruded portion (564, 56A2, 56B2) seen in a direction of a rotational axis thereof,
the at least one protruded portion of the u-turn member is configured to press the filter, and
the at least one non-protruded portion of the u-turn member is configured either to press the filter with a force less than a force of the at least one protruded portion or not to make contact with the filter.

2. An air conditioner indoor unit, comprising:
a filter (16) for removing dirt and dust from an indoor air; and
a filter moving mechanism including: a driving part (54, 59) configured to apply to the filter a force for moving the filter; and a u-turn member (56, 56A, 56B) for turning back the filter, the u-turn member being attached in a rotatable state, the u-turn member including at least one protruded portion (563, 56A1, 56B1) and at least one non-protruded portion (564, 56A2, 56B2) seen in a direction of a rotational axis thereof, the protruded portion of the u-turn member being configured to press against the filter, the non-protruded portion of the u-turn member being configured either to press against the filter with a force less than a force of the protruded portion or not to make contact with the filter.

3. The filter moving mechanism recited in claim 1, wherein the numbers of the at least one protruded portion and the at least one non-protruded portion included in the u-turn member are respectively plural, the protruded portions and the non-protruded portions being disposed to be rotationally symmetric about the rotational axis as a rotational center.

4. The filter moving mechanism recited in claim 1 or 3, wherein the numbers of the at least one protruded portion and the at least one non-protruded portion included in the folding-back member are respectively three or more.

5. The filter moving mechanism recited in claim 1, 3 or 4, wherein the u-turn part is configured to be rotated in conjunction with moving of the filter.

6. The filter moving mechanism recited in claim 1, 3, 4 or 5, wherein the u-turn member is a rod-shaped member (56, 56A, 56B) including the at least one protruded portion formed in a strip shape and the at least one non-protruded portion formed in a strip shape.

7. The filter moving mechanism recited in claim 6, wherein the rod-shaped member is a roller (56, 56A, 56B) including a rotational shaft and a base part in which the at least one protruded portion and the at least one non-protruded portion are formed.

8. The filter moving mechanism recited in claim 1, 3, 4, 5 or 6, further comprising:
a guide member (5 3) having, a beam (531) that the u-turn member is attached to an end thereof, the beam allowing the filter to move along therewith.

9. The air conditioner indoor unit recited in claim 2, wherein the numbers of the at least one protruded portion and the at least one non-protruded portion included in the u-turn member are respectively plural, the protruded portions and the non-protruded portions being disposed to be rotationally symmetric about the rotational axis as a rotational center.

10. The air conditioner indoor unit recited in claim 2 or 9, wherein the numbers of the at least one protruded portion and the at least one non-protruded portion included in the folding-back member are respectively three or more.

11. The air conditioner indoor unit recited in claim 2, 9 or 10, wherein the u-turn part is configured to be rotated in conjunction with moving of the filter.

12. The air conditioner indoor unit recited in claim 2, 9, 10 or 11, wherein the u-turn member is a rod-shaped member (56, 56A, 56B) including the at least one protruded portion formed in a strip shape and the at least one non-protruded portion formed in a strip shape.

13. The air conditioner indoor unit recited in claim 12, wherein the rod-shaped member is an end roller (56, 56A, 56B) including: a base part (561) in which the at least one protruded portion and the at least one non-protruded portion are formed; and a rotational shaft (562) formed as a single member together with the base part

14. The air conditioner indoor unit recited in claim 2, 9, 10, 11, 12 or 13, wherein the filter moving mechanism further includes a guide member (53) having a beam (531) that the folding-back member is attached to an end thereof, the beam allowing the filter to move along therewith.

15. The air conditioner indoor unit recited in claim 2, 9, 10, 11, 12, 13 or 14,
wherein the driving part includes a driving roller (54), and
the filter is a tubular member disposed between the u-turn member and the driving roller, the tubular member having a high stiffness portion on a part thereof, the high stiffness portion having a stiffness higher than a stiffness of the other part of the endless band-like member.

16. The air conditioner indoor unit recited in claim 15, wherein the filter is formed in an endless band shape by welding end portions of a net made of plastic.
